# EUROPÄISCHE PATENTSCHRIFT

(11) **EP 3 430 277 B1**
(45) Veröffentlichungstag und Bekanntmachung des Hinweises auf die Patenterteilung: **21.10.2020**
(21) Anmeldenummer: 17716465.4
(22) Anmeldetag: 14.03.2017
(51) Int. Cl.: F16B 37/06

(54) **SELBSTSTANZENDES EINPRESSELEMENT, EINPRESSVERBINDUNG SOWIE VERFAHREN ZUR HERSTELLUNG EINER SOLCHEN EINPRESSVERBINDUNG**
SELF-PIERCING PRESS-IN ELEMENT, PRESS-IN CONNECTION, AND METHOD FOR PRODUCING SUCH A PRESS-IN CONNECTION
ELÉMENT D'INSERTION À FORCE AUTOPERFORANT, ASSEMBLAGE PAR INSERTION À FORCE ET PROCÉDÉ POUR RÉALISER UN TEL ASSEMBLAGE PAR INSERTION À FORCE

(30) Priorität: 14.03.2016 DE 102016204173
(43) Veröffentlichungstag der Anmeldung: 23.01.2019
(73) Patentinhaber: Richard Bergner Verbindungstechnik GmbH & Co.KG, 91126 Schwabach (DE)
(72) Erfinder: HIRSCHMANN, Markus, 91052 Erlangen (DE); NIEDERMÜLLER, Juliane, 91186 Büchenbach (DE)
(74) Vertreter: FDST Patentanwälte
(86) Internationale Anmeldenummer: PCT/EP2017/056028
(87) Internationale Veröffentlichungsnummer: WO 2017/157959

(56) Entgegenhaltungen:
- EP-A2- 2 604 871
- CN-A- 104 329 345
- GB-A- 1 468 150
- JP-U- H0 394 412
- US-A1- 2010 129 174
- US-A1- 2014 173 877
- US-A1- 2014 314 525
- US-B1- 6 644 903

## Beschreibung

Die Erfindung betrifft ein selbststanzendes Einpresselement, wie beispielsweise eine Stanzmutter, welches zum selbststanzenden Einpressen in ein Bauteil, insbesondere ein Blech ausgebildet ist, mit den Merkmalen des Oberbegriffs des Patentanspruchs 1. Die Erfindung betrifft weiterhin eine Einpressverbindung zwischen einem derartigen selbststanzenden Einpresselement und einem Bauteil, sowie ein Verfahren zur Ausbildung dieser Einpressverbindung.

Stanzmuttern nach dem Stand der Technik sind beispielsweise aus der DE 10 2014 104 571 A1 oder der EP 2 604 871 A2 zu entnehmen.

Selbststanzende Einpresselemente weisen allgemein einen Stanzkragen mit einer umlaufenden stirnseitigen Schneidkante auf. Das Einpresselement wird zur Ausbildung der Füge- oder Einpressverbindung mit dem Stanzkragen voraus gegen eine Blechoberseite gepresst. Gegenüberliegend ist eine geeignet ausgebildete Matrize als Widerlager positioniert. Mittels des Stanzkragens wird in das Bauteil ein Loch eingestanzt, in das der Stanzkragen eingeführt wird. Durch weitere Verformungsvorgänge bei diesem einstufigen Stanz- und Einpressvorgang wird dann üblicherweise sowohl eine axiale Auszugssicherung als auch eine Verdrehsicherung des Einpresselements ausgebildet.

Zur Ausbildung der Verdrehsicherung weisen die bekannten Stanzmuttern an einer Unterseite ihres Kopfes sich radial erstreckende Rippen auf. Diese sind üblicherweise in einer muldenartigen ringförmigen Vertiefung angeordnet, die innen vom Stanzkragen und außen von einem weiteren umlaufenden Ringkragen begrenzt ist.

Gemäß der DE 10 2014 104 571 A1 wird beim Einpressvorgang das Blech mithilfe einer umlaufenden Ringnase der Matrize von unten in die Zwischenräume zwischen die einzelnen Verdrehsicherungsnasen eingepresst. Durch diese Materialverdrängung erfolgt zugleich auch eine axiale Auszugssicherung.

Zur zusätzlichen Verdrehsicherung sind gemäß der DE 10 2014 104 571 A1 ergänzend an einer Mantelseite des Stanzkragens radial abstehende Nasen ausgebildet.

Eine ähnliche Ausgestaltung einer Stanzmutter ist auch aus der US D437 211 S zu entnehmen. Aus der DE 10 2009 012 243 A1 ist eine weitere Stanzmutter zu entnehmen, bei der der Stanzkragen mit einer umlaufenden Rändelung versehen ist.

Aus der GB 1 468 150 B ist ebenfalls eine Stanzmutter mit einer Rändelung am Stanzkragen zu entnehmen. Eine Kopfauflagefläche ist konisch nach innen abfallend ausgebildet, so dass das Blechmaterial am Lochrand in einen etwa V-förmigen Hinterschnitt zwischen Stanzkragen und Kopfauflagefläche eindringt.

Derartige selbststanzende Einpresselemente, insbesondere Stanzmuttern, werden insbesondere auch in der Automobilindustrie speziell bei Leichtbauanwendungen für Bauteile aus Leichtmetall eingesetzt. Aus Gründen der Gewichtseinsparung und eines geringen Bauraums werden möglichst klein bauende Einpresselemente angestrebt. Dies läuft jedoch häufig den Anforderungen im Hinblick auf eine ausreichende axiale Auszugsfestigkeit sowie eine ausreichende Verdrehsicherheit entgegen.

Ausgehend hiervon liegt der Erfindung die Aufgabe zugrunde, ein selbststanzendes Einpresselement, insbesondere Stanzmutter, anzugeben, mit dem eine zuverlässige Einpressverbindung mit einem (Blech-)Bauteil ausgebildet werden kann. Der Erfindung liegt weiterhin die Aufgabe zugrunde, eine entsprechende Einpressverbindung sowie ein Verfahren zur Ausbildung derselben anzugeben.

Die Aufgabe wird gemäß der Erfindung gelöst durch ein selbststanzendes Einpresselement, insbesondere eine Stanzmutter mit den Merkmalen des Anspruches 1. Die Aufgabe wird weiterhin gelöst durch eine Einpressverbindung zwischen einem derartigen Einpresselement und einem Bauteil mit den Merkmalen des Anspruchs 12 sowie durch ein Verfahren zur Ausbildung einer derartigen Einpressverbindung mit den Merkmalen des Anspruchs 15.

Die im Hinblick auf das Einpresselement angeführten Vorteile und bevorzugten Ausgestaltungen lassen sich sinngemäß auch auf die Einpressverbindung sowie das Verfahren und umgekehrt übertragen.

Das Einpresselement erstreckt sich dabei allgemein in einer Längsrichtung und weist ein Kopfteil mit einer als Kopfauflage ausgebildeten Unterseite auf, mit der das Kopfteil im verpressten Zustand auf einer Oberseite des Bauteils aufliegt. Weiterhin weist das Einpresselement einen an der Unterseite des Kopfteils ausgebildeten Stanzkragen mit einer endseitigen, umlaufenden Schneidkante auf. Der Stanzkragen weist dabei eine bezüglich der Längsrichtung schräg geneigte Außenmantelfläche auf und ist insbesondere insgesamt konisch aufweitend ausgebildet. Hierdurch ist zwischen der Schneidkante und der Kopfauflage ein Freiraum oder Hinterschnitt ausgebildet. Von besonderer Bedeutung ist weiterhin, dass die Kopfauflage einen umlaufenden Verdrängersteg aufweist, an den sich in radialer Richtung ein radial äußerer Bereich der Kopfauflage anschließt, wobei dieser radial äußere Bereich in Längsrichtung gegenüber dem Verdrängersteg zurückversetzt ist. Der Verdrängersteg ist dabei insbesondere als vollständig umlaufender Ringsteg ausgebildet. Er schließt sich dabei insbesondere unmittelbar an den Stanzkragen in radialer Richtung an, bildet daher einen umlaufenden Bund zum Stanzkragen.

Der besondere Vorteil dieses an der Kopfauflage ausgebildeten und sich an den Stanzkragen unmittelbar anschließenden Verdrängerstegs ist darin zu sehen, dass beim Einpressvorgang mit dessen Hilfe von der Oberseite des Bauteils her Material in den Hinterschnitt bzw. Freiraum durch einen Umformvorgang verdrängt und damit eingepresst wird. Dieses in den Hinterschnitt eingepresste Material von der Oberseite des Bauteils bildet daher mit dem Stanzkragen einen in axialer oder Längsrichtung wirksamen Formschluss für eine zuverlässige axiale Auszugssicherung aus. Der umlaufende Verdrängersteg ist daher insgesamt derart ausgebildet, dass beim Einpressen Blechmaterial in den Hinterschnitt zur Ausbildung der axialen Auszugssicherung verdrängt wird. Durch das Verdrängen sowie das Einpressen des Materials wird zudem bereits auch eine Klemmung und damit ein Klemmsitz erreicht, so dass das Einpresselement bereits durch diese Klemmung auch gegen ein Verdrehen gesichert ist. Dies erfolgt zum einen durch die in Umfangsrichtung wirkende Reibung des Verdrängerstegs als auch durch die Reibung zwischen dem eingepressten Material und der Außenmantelfläche des Stanzkragens. Der Verdrängersteg erzeugt daher im eingepressten Zustand eine zusätzliche vorteilhafte Reibung. Der Verdrängersteg selbst weist vorzugsweise keine in Umfangsrichtung wirkende Formschlusselemente, wie beispielsweise eine mantelseitige Rändelung für eine Verdrehsicherungsfunktion auf.

Zur Ausbildung der axialen Auszugssicherung ist daher insbesondere kein Umformen der Unterseite des Blechmaterials erforderlich und auch nicht vorgesehen. Dies ermöglicht insbesondere eine glatte Bauteilunterseite auch bei eingepresstem Stanzelement. Darüber hinaus ist auch kein Umformen des Stanzkragens erforderlich, um beispielsweise den gewünschten Formschluss in Axialrichtung beispielsweise durch Ausbildung eines Hintergriffs mit der Bauteilunterseite auszubilden. In diesem Fall würde der Stanzkragen über die Bauteilseite unterstehen, was häufig ebenfalls unerwünscht ist.

Der Verdrängersteg geht dabei zweckdienlicherweise unter Ausbildung einer Stufe in den radial äußeren Bereich über. Es ist daher insbesondere eine umlaufende Verdrängerkante ausgebildet. Im Querschnitt betrachtet weist der Verdrängersteg vorzugsweise eine ringförmige Horizontalfläche und eine sich daran anschließende, vorzugsweise parallel zur Längsrichtung verlaufende Mantelfläche auf. Grundsätzlich kann die Mantelfläche auch geneigt zur Längsrichtung orientiert sein.

Zur Ausbildung der erforderlichen Verdrehsicherung sind in erfindungsgemäßer Ausgestaltung weiterhin im radial äußeren Bereich um den Umfang verteilt mehrere Rippen ausgebildet. Diese verlaufen dabei in radialer Richtung. Ihre in Umfangsrichtung orientierten Seitenflächen bilden daher im eingepressten Zustand einen in Umfangsrichtung wirksamen Formschluss mit dem Bauteil aus. Die Rippen werden beim Einpressvorgang in die Oberseite des Bauteils eingepresst. Vorzugsweise sind dabei mehr als 8 Rippen, insbesondere 10 Rippen und bevorzugt gleichmäßig um den Umfang verteilt angeordnet. Maximal sind beispielsweise 14 Rippen ausgebildet. Jede Rippe weist eine Rippenbreite auf und der Abstand zwischen benachbarten Rippen ist - im Unterschied zu einer Rändelung - deutlich größer als die Rippenbreite und beträgt beispielsweise zumindest das zumindest 2-fache oder das zumindest 3-fache der Rippenbreite.

Die Kopfauflage, insbesondere der radial äußere Bereich der Kopfauflage, ist dabei zweckdienlicherweise senkrecht zur Längsrichtung, also horizontal ausgerichtet, weist also vorzugsweise keine zur Längsrichtung geneigte Kopfauflagefläche auf. Sie ist insgesamt als eine ebene Ringfläche mit den Rippen als Erhebungen ausgebildet.

Zweckdienlicherweise sind ausschließlich in diesem radial äußeren Bereich der Kopfauflage Rippen zur Ausbildung der Verdrehsicherung angeordnet. Weder der Verdrängersteg, noch der Stanzkragen weisen daher in bevorzugter Ausgestaltung weitere als Verdrehsicherungselemente ausgebildete Rippen oder dergleichen auf. Die Rippen erstrecken sich dabei in radialer Richtung über annähernd den gesamten äußeren Bereich zumindest über zumindest 3/4 des äußeren Bereichs. Typischerweise laufen sie zu einem Umfangsrand des Einpresselements schräg oder verrundet aus.

Die Rippen schließen sich in radialer Richtung unmittelbar an den Verdrängersteg an und fluchten vorzugsweise in radialer Richtung mit dem Verdrängersteg. Die Rippen gehen daher in radialer Richtung absatzfrei in den Verdrängersteg über, sind daher auf gleicher axialer Höhe angeordnet.

Durch die sich unmittelbar insbesondere fluchtend anschließenden Rippen wird zusätzlich Material in Richtung des Hinterschnitts gepresst, so dass ein hoher Füllgrad erzielt wird.

Die umlaufende Mantelfläche des Verdrängerstegs und/oder des Stanzkragens sind bevorzugt als glatte Mantelflächen, nämlich insbesondere als Kegel- und/oder Zylindermantelflächen ausgebildet. Speziell weist der Stanzkragen eine Kegelmantelfläche und der Verdrängersteg eine Zylindermantelfläche auf. Am Verdrängersteg sind daher - ggf. abgesehen von den Rippen - keine in Umfangsrichtung wirkende Formschlusselemente, wie beispielsweise eine Rändelung ausgebildet.

Weiterhin weist das Kopfteil an seiner Unterseite keinen äußeren umlaufenden Ringsteg auf. Die Rippen laufen nach außen hin frei aus, ohne dass sie von einem äußeren umlaufenden Ringsteg begrenzt sind. Bei herkömmlichen Stanzmuttern, bei denen beim Einpressvorgang das Blech von unten gegen die Kopfauflage gepresst und in diese eingeformt wird, ist dieser äußere umlaufende Ringsteg üblicherweise ergänzend zur Ausbildung der axialen Auszugssicherung vorgesehen. Auch dieser weist typischerweise bei den herkömmlichen Stanzmuttern einen Hinterschnitt auf. Durch die vorliegende Maßnahme mit dem Verdrängersteg, welcher von oben Material in den Hinterschnitt am Stanzkragen einpresst, ist in vorteilhafter Weise ein Verzicht auf diesen Ringsteg möglich. Die axiale Auszugssicherung wird ausschließlich durch das Einpressen von Material in den Hinterschnitt am Stanzkragen ausgebildet.

Insgesamt zeichnet sich daher die mit einem derartigen Einpresselement hergestellte Einpressverbindung dadurch aus, dass gerade kein Umformen der Unterseite des Bauteils erfolgt.

Um ausreichend Material in den Hinterschnitt einpressen zu können übersteht der Verdrängersteg in radialer Richtung die Schneidkante, d.h. der Verdrängersteg erstreckt sich bis zu einem Radius, welcher größer ist als der durch die Schneidkante definierte Radius.

Der Verdrängersteg, insbesondere der über die Schneidkante in radialer Richtung überstehende Teilbereich definiert ein erstes (Verdränger-) Volumen und der Hinterschnitt definiert ein zweites Volumen. Um zuverlässig ein vollständiges Füllen des Hinterschnitt mit durch den Verdrängersteg verdrängtem Material zu gewährleisten ist in bevorzugter Ausgestaltung das erste Volumen größer als das zweite Volumen. Insbesondere ist das erste Volumen um den Faktor 2 bis 5, speziell 3 bis 4 größer ist als das zweite Volumen.

Durch das deutlich größere Verdrängervolumen wird zuverlässig ein vollständiges Auffüllen des Hinterschnitts sowie die gewünschte Klemmung erzielt. Unter vollständiges Auffüllen wird hierbei verstanden, dass das in den Hinterschnitt verdrängte Material den Hinterschnitt ggf. bis auf einen geringfügigen Freiraum im Übergangsbereich des Stanzkragens zum Verdrängersteg ausfüllt. Der Füllgrad des Hinterschnitts liegt bei zumindest 90%.

Vorzugsweise weisen die Rippen in Summe zusammen ein drittes Volumen auf, welches kleiner ist als das erste Volumen des Verdrängerstegs (16), insbesondere lediglich 30% bis 90% des ersten Volumens beträgt.

Weiterhin weist der Verdrängersteg eine radiale Breite auf, welche kleiner gleich einer radialen Breite des äußeren Bereichs der Kopfauflage ist. Die radiale Breite des Verdrängerstegs liegt beispielsweise bei dem zumindest 0,5-Fachen der radialen Breite des äußeren Bereichs und insbesondere im Bereich zwischen dem 0,5- und dem 0,9-Fachen des äußeren Bereichs. Unter radialer Breite wird dabei allgemein die Breite der jeweiligen (Ring-)Fläche einerseits des Verdrängerstegs und andererseits des äußeren Bereichs in radialer Richtung verstanden. Durch diese Maßnahme wird sichergestellt, dass der äußere Bereich eine ausreichend große radiale Breite aufweist, die für die gewünschte Verdrehsicherung und die Rippen erforderlich ist. Gleichzeitig ist der Verdrängersteg ausreichend groß, um die gewünschte Menge an Material für die axiale Auszugssicherung in den Hinterschnitt verdrängen zu können.

Darüber hinaus weist der Verdrängersteg eine axiale Länge auf, welche vorzugsweise geringer ist als eine axiale Länge des Stanzkragens und insbesondere im Bereich zwischen 30% und 70%, und vorzugsweise im Bereich zwischen 40% und 60% der axialen Länge des Stanzkragens liegt. Vorzugsweise beträgt die axiale Länge dabei in etwa die Hälfte der axialen Länge des Stanzkragens. Unter axialer Länge des Verdrängerstegs ist dabei dessen Erstreckung in Längsrichtung zu verstehen, beginnend an der axialen Höhe des äußeren Bereichs (am Übergang zum Verdrängersteg) bis zu der (horizontalen) Ringfläche des Verdrängerstegs. Die axiale Länge des Stanzkragens wiederum ist definiert als die Erstreckung in Längsrichtung, beginnend von der Ringfläche des Verdrängerstegs bis zur Schneidkante.

Bei dem Einpresselement handelt es sich dabei insbesondere um eine Stanzmutter mit einem Innengewinde im Kopfteil. Der Stanzkragen ist gegenüber dem Innengewinde vorzugsweise radial nach außen versetzt, fluchtet daher nicht mit dem Gewinde. Beim Stanzvorgang wirkende Kräfte beeinflussen daher insbesondere die Lehrenhaltigkeit des Gewindes nicht. Durch den Abstand in radialer Richtung, also insbesondere ein stufenförmiger Versatz des Stanzkragens im Hinblick auf das Innengewinde wird daher sichergestellt, dass keine ungewünschte Verformung des Innengewindes auftritt.

Weiterhin ist allgemein auch vorgesehen, dass am Stanzkragen selbst kein Innengewinde ausgebildet ist. Zweckdienlicherweise erstreckt sich das Innengewinde weiterhin bis zur axialen Höhe des Verdrängerstegs. Dies entspricht der Axialposition der horizontalen Ringfläche des Verdrängerstegs. Durch den Verdrängersteg ist insgesamt in diesem Bereich das Einpresselement vergleichsweise steif ausgebildet. Gleichzeitig wird hierdurch das Innengewinde möglichst weit in Richtung zum Stanzkragen gezogen, sodass insgesamt die axiale Länge des Kopfteils gering gehalten werden kann, um die Stanzmutter insbesondere möglichst kompakt bauend ausgestalten zu können.

Im Hinblick auf die gewünschte klein bauende Ausgestaltung ist ein Durchmesser der Kopfauflage lediglich etwa 20% bis 40% und insbesondere lediglich etwa 25% bis 35% größer als ein Durchmesser des Stanzkragens. Durch diese Maßnahme wird insgesamt eine möglichst klein bauende Stanzmutter gewährleistet. Durch die zuvor beschriebenen Maßnahmen zur axialen Auszugssicherung sowie der Verdrehsicherung lassen sich die erforderlichen Auszugs- und Verdrehfestigkeiten zuverlässig auch bei derartigen klein bauenden Elementen erreichen.

Unter Durchmesser wird vorliegend allgemein jeweils der maximale Abstand in radialer Richtung zwischen gegenüberliegenden Bereichen der Kopfauflage bzw. des Stanzkragens verstanden. Üblicherweise ist das Einpresselement bezüglich einer Mittenachse rotationssymmetrisch ausgebildet und weist einen kreisrunden Querschnitt auf. Alternativ hierzu besteht allerdings auch die Möglichkeit eines nicht runden, beispielsweise polygonalen Querschnitts des Einpresselements, insbesondere von dessen Kopfteil.

Bei der mit einem derartigen Einpresselement, insbesondere Stanzmutter, ausgebildeten Einpressverbindung ist - wie bereits erwähnt - durch den Verdrängersteg Material von der Oberseite des Bauteils in den Hinterschnitt zwischen Schneidkante und Verdrängersteg eingepresst.

Weiterhin zeichnet sich die Einpressverbindung dadurch aus, dass der Stanzkragen nicht über eine Unterseite des Bauteils übersteht. Vorzugsweise fluchtet der Stanzkragen mit der Unterseite oder ist gegenüber dieser Unterseite in Längsrichtung lediglich geringfügig (beispielsweise bis zu 10%, maximal bis zu 20% der Bauteildicke) zurückversetzt.

Weiterhin zeichnet sich die Einpressverbindung vorzugsweise dadurch aus, dass das Bauteil an seiner Unterseite gerade nicht nach oben in Richtung zum Kopfteil umgebogen ist. Vielmehr weist das Bauteil umlaufend zu dem Stanzloch, in dem das Einpresselement eingepresst ist, eine ebene, unverformte Bauteilunterseite auf. Der Stanzkragen umgreift daher auch nicht die Bauteilunterseite.

Bei dem Bauteil handelt es sich dabei insbesondere um ein Leichtmetall-Bauteil, d.h. das Bauteil besteht aus einem Leichtmetall, insbesondere aus Aluminium. Hierunter werden allgemein Aluminiumlegierungen oder auch reines Aluminium verstanden. Alternativ zu einem Aluminiumbauteil kann das Bauteil auch aus beispielsweise einer Magnesiumlegierung etc. bestehen. Insbesondere bei derartigen Leichtmetall-Bauteilen, die speziell in der Kraftfahrzeugindustrie zur Gewichtsreduzierung eingesetzt werden, werden derartige Stanzelemente als Verbindungselemente eingesetzt. Das Einpresselement selbst besteht üblicherweise aus Stahl.

Bei dem Verfahren zur Herstellung einer solchen Einpressverbindung wird in an sich bekannter Weise in einem einstufigen Vorgang mithilfe des selbststanzenden Einpresselements zunächst ein Loch in das Bauteil eingestanzt und anschließend das Einpresselement in das ausgestanzte Loch eingepresst. Dies erfolgt mithilfe einer Matrize, die gegen die Unterseite des Bauteils gepresst wird. Ein Stanzbutzen wird dabei über eine Ausnehmung in der Matrize aufgenommen und abgeführt.

Von besonderer Bedeutung ist hierbei, dass die Matrize eine ebene Matrizenoberseite aufweist und eben keinen umlaufenden Ringkragen, welcher das Blech an seiner Unterseite verformt und nach oben verpresst. Durch diese Maßnahme werden der gewünschte bündige Abschluss und die ebene Bauteilunterseite gewährleistet.

Zweckdienlicherweise weist dabei die innere Ausnehmung der Matrize eine aufgeraute Innenmantelfläche auf, sodass der Stanzbutzen sicher und zuverlässig in der Ausnehmung insbesondere durch Kraftschluss gehalten ist. Durch diese Maßnahme wird verhindert, dass beim Zurückfahren der Matrize der Stanzbutzen weiterhin am Bauteil oder an dem Einpresselement haften bleibt. Durch diese Maßnahme wird eine hohe Prozesssicherheit erzielt. Die aufgeraute Innenmantelfläche wird beispielsweise durch einen Erodierprozess erreicht. Zweckdienlicherweise ist lediglich ein oberer umlaufender Rand der Ausnehmung mit einer Aufrauhung versehen. Im weiteren Verlauf weist die Matrize dann insbesondere eine glatte Innenmantelfäche an der Ausnehmung auf. Weiterhin weitet sich diese zweckdienlicherweise konisch auf, sodass nachfolgend zu dem aufgerauten Bereich der Stanzbutzen in einfacher Weise entsorgt werden kann.

Die Ausnehmung weist daher vorzugsweise zunächst einen zylindrischen Bereich auf, welcher die aufgeraute Innenmantelfläche aufweist, an die sich anschließend ein sich konisch erweiternder Bereich mit einer glatten Innenmantelfläche anschließt.

Der Stanzbutzen wird bei einem nachfolgenden weiteren Einpressvorgang durch einen nachfolgenden Stanzbutzen herausgedrückt und kann über die Ausnehmung zuverlässig entsorgt werden.

Ein Ausführungsbeispiel der Erfindung wird nachfolgend anhand der Figuren näher erläutert. Diese zeigen teilweise in schematisierten Darstellungen:
- Fig. 1: eine Querschnittsdarstellung einer Stanzmutter,
- Fig. 2: eine Draufsicht von unten auf die Stanzmutter gemäß Fig. 1,
- Fig. 3 bis 5: Illustrationen zur Erläuterung des Stanz- und Fügeprozesses zur Ausbildung einer Einpressverbindung mit einem (Blech-)Bauteil, wobei Fig. 3 einen Ausgangszustand vor Beginn des Stanz- und Fügeprozesses, Fig. 4 die Situation beim Stanzvorgang sowie Fig. 5 die Situation nach dem Fügeprozess bei ausgebildeter Einpressverbindung jeweils in einer Querschnittsdarstellung zeigt, sowie
- Fig. 6: eine ausschnittsweise vergrößerte Schnittdarstellung der Einpressverbindung.

In den Figuren sind gleich wirkende Teile jeweils mit den gleichen Bezugszeichen versehen.

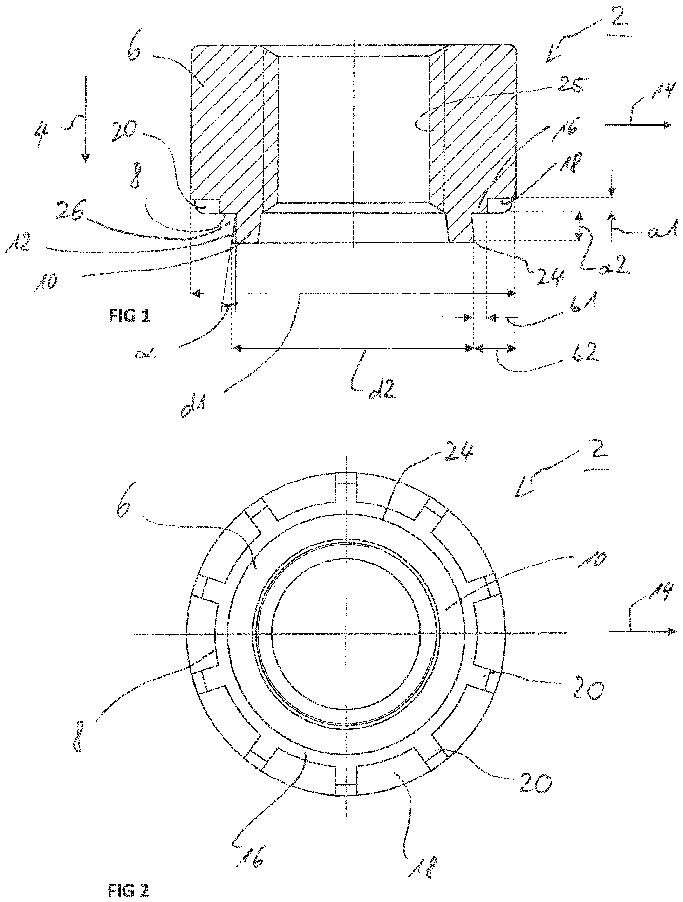

Das in den Fig. 1 und 2 dargestellte selbststanzende Einpresselement ist als eine Stanzmutter 2 ausgebildet. Es erstreckt sich in Längsrichtung 4 und weist ein Kopfteil 6 auf, welches in Längsrichtung 4 betrachtet an seiner unteren Seite eine Kopfauflage 8 aufweist, welche typischerweise ringförmig ausgebildet ist. In Längsrichtung 4 schließt sich an das Kopfteil 6 und an die Kopfauflage 8 ein Stanzkragen 10 an. Dieser weist eine Außenmantelfläche 12 auf, welche gegenüber der Längsrichtung 4 unter einem Winkel α von beispielsweise 10° bis 30° geneigt ist. Die Außenmantelfläche 12 ist vorzugsweise als glatte Kegelmantelfläche ausgebildet. Vorzugsweise ist der gesamte Stanzkragen 10 unter dem Winkel α als sich konisch aufweitender Ringsteg ausgebildet.

Die Kopfauflage 8 lässt sich in radialer Richtung 14 in zwei Teilbereiche unterteilen, nämlich einen inneren Bereich, welcher durch einen umlaufenden, ringförmigen Verdrängersteg 16 gebildet ist sowie einen radial äußeren Bereich 18. Der Verdrängersteg 16 schließt sich dabei unmittelbar an den Stanzkragen 10 an und erstreckt sich in radialer Richtung 14 über eine radiale Breite b1.

Der äußere Bereich 18 ist gegenüber dem Verdrängersteg 16 entgegen der Längsrichtung 4 zurückversetzt. Der äußere Bereich 18 erstreckt sich in radialer Richtung 14 über eine radiale Breite b2.

Der Verdrängersteg 16 geht in den äußeren Bereich 18 dabei unter Ausbildung einer Stufe über. An seinem radial äußersten Bereich weist der Verdrängersteg 16 daher insbesondere eine Kante auf. Die in Richtung zum Stanzkragen 10 orientierte Stirnfläche (Ringfläche) ist dabei vorzugsweise als eine ebene, horizontale Fläche senkrecht zur Längsrichtung 4 ausgebildet. Weiterhin ist die Umfangsfläche des Verdrängerstegs 16 vorzugsweise als eine sich parallel zur Längsrichtung 4 erstreckende Vertikalfläche, insbesondere Zylindermantelfläche, ausgebildet. Auch diese ist vorzugsweise eben ohne Erhebungen oder Vertiefungen ausgebildet.

Wie insbesondere aus der Draufsicht der Fig. 2 zu entnehmen ist, sind am äußeren Bereich 18 um den Umfang gleichmäßig verteilt mehrere Rippen 20 ausgebildet, welche eine Verdrehsicherung ausbilden. Insgesamt sind im Ausführungsbeispiel zehn Rippen 20 angeordnet. Die Rippen 20 erstrecken sich bevorzugt exakt in radialer Richtung 14

Wie wiederum aus der Schnittdarstellung der Fig. 1 zu erkennen ist, weisen die Rippen 20 in Längsrichtung 4 eine Höhe auf, welche vorzugsweise einer axialen Länge a1 des Verdrängerstegs 16 entspricht. Die Rippen 20 fluchten daher insbesondere mit dem Verdrängersteg 16, d.h. im Übergangsbereich zwischen Verdrängersteg 16 und den Rippen 20 ist in radialer Richtung kein Versatz ausgebildet. Das radiale Ende der Rippen 20 ist im Ausführungsbeispiel etwas beabstandet von dem äußeren Rand der Kopfauflage 8. Wie weiterhin aus der Querschnittdarstellung der Fig. 1 zu erkennen ist, ist die radiale Breite b1 des Verdrängerstegs 16 kleiner der radialen Breite b2 des äußeren Bereichs 18 und liegt insbesondere bei etwa 1/3 der radialen Breite b2 des äußeren Bereichs.

Das gesamte Kopfteil 6 und damit auch die Kopfauflage 8 weist einen Durchmesser d1 auf, welcher vorzugsweise lediglich etwa 35% größer ist als ein Durchmesser d2 des Stanzkragens 10.

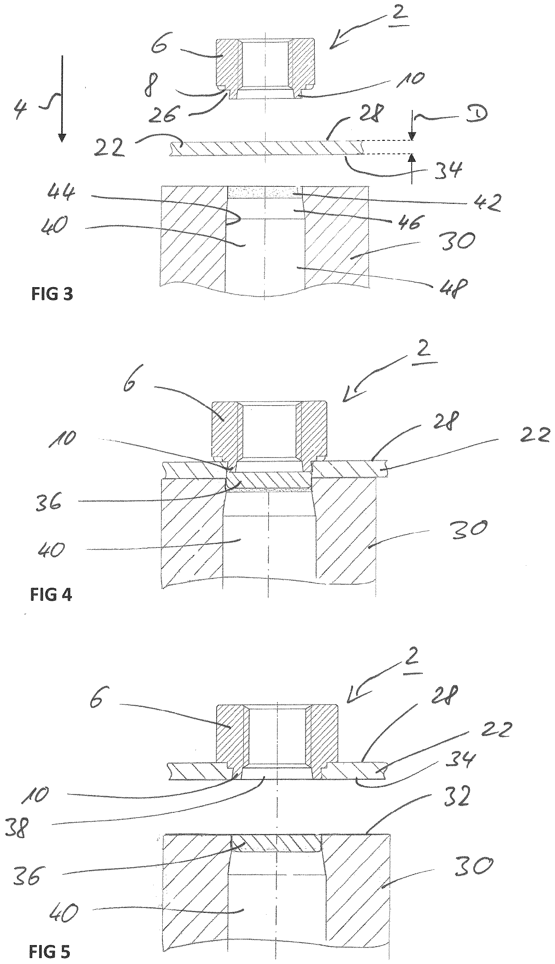

Dieser erstreckt sich in Längsrichtung 4 über eine axiale Länge a2, die vorzugsweise deutlich länger als die axiale Länge a1 des Verdrängerstegs ist. Die axiale Länge des Stanzkragens 20 zuzüglich der axialen Länge a1 des Verdrängerstegs ist dabei vorzugsweise kleiner gleich einer Blechdicke D eines Bauteils 22, in das die Stanzmutter 2 eingepresst werden soll (vgl. hierzu beispielsweise Fig. 3).

Die Stanzmutter 2 weist weiterhin ein Innengewinde 25 auf, welches sich vorzugsweise lediglich bis zur axialen Höhe des Verdrängerstegs 16 und damit lediglich bis zum Beginn des Stanzkragens 10 erstreckt.

Der Stanzkragen 10 weist endseitig eine umlaufende Schneidkante 24 auf. Aufgrund der schräg geneigten Außenmantelfläche 12 ist zwischen der Schneidkante 24 und dem Verdrängersteg 16 ein Hinterschnitt 26 ausgebildet (vgl. Fig. 1). Von besonderer Bedeutung für das angestrebte vollständige Verfüllen des Hinterschnitts mit Material ist das durch den Verdrängersteg 16 definierte Verdrängervolumen, nachfolgend als erstes Volumen bezeichnet. Dieses ist definiert durch den ringförmigen Verdrängersteg 16 mit der im Wesentlichen rechteckförmigen Querschnittsfläche mit den Kantenlängen b1 (radiale Breite) und a1 (axiale Länge). Dieses erste Volumen ist dabei deutlich größer als ein zweites Volumen des Hinterschnitts 26. Dieses ist definiert durch den Ring mit einer dreieckförmigen Querschnittsfläche, die durch die schräg orientierten Außenmantelfläche des Stanzkragens 10 sowie einen durch den Winkel α definierten Überstand der Schneidkante 24 in radialer Richtung 14 definiert ist. Das erste Volumen weist dabei zumindest das 2-fache, vorzugsweise zumindest das 3-fache und speziell das 2 bis 5-fache oder das 3 bis 4-fache des zweiten Volumens auf.

Bevorzugt gilt diese Anforderung auch für das (erste) Volumen des in radialer Richtung überstehenden Teilbereichs des Verdrängerstegs 16.

Von weiterer wesentlicher Bedeutung für das Verfüllen ist weiterhin, dass das Hinterfüllen zusätzlich durch die Rippen 20 unterstützt wird, die sich unmittelbar an den Verdrängersteg 16 anschließen. Deren drittes Volumen ist vorzugsweise kleiner als das erste Volumen und liegt beispielwese bei 30% bis 90% des ersten Volumens.

Der Setzvorgang der Stanzmutter 2 wird nachfolgend anhand der Fig. 3 bis 5 näher erläutert:
Die Stanzmutter 2 wird gegen eine Oberseite 28 des Bauteils 22 mithilfe eines geeigneten Einpresswerkzeugs 4 (nicht dargestellt) in Längsrichtung 4 unter Ausübung einer Einpresskraft gepresst. Das Bauteil 22 stützt sich dabei gegen eine Matrize 30 ab, welche eine Matrizenoberseite 32 aufweist, gegen die eine Unterseite 34 des Bauteils 22 zum Aufliegen kommt. Die Matrizenoberseite 32 ist dabei als eine ebene Fläche ausgebildet, welche keinen umlaufenden Ring- oder Verformungskragen zur Verformung der Unterseite 34 aufweist.

Beim insgesamt einstufigen Fügeprozess erfolgt zunächst ein Stanzvorgang, bei dem mithilfe des Stanzkragens 10 ein Stanzbutzen 36 aus dem Bauteil 22 zur Erzeugung eines Lochs 38 ausgestanzt wird. Dieser Stanzbutzen wird nach unten in eine Ausnehmung 40 der Matrize 30 eingepresst. Die Ausnehmung 40 ist dabei nach Art einer zentralen Bohrung in der Matrize 30 ausgebildet. Sie setzt sich nach unten fort, sodass der Stanzbutzen 36 aus der Matrize 30 entfernt werden kann.

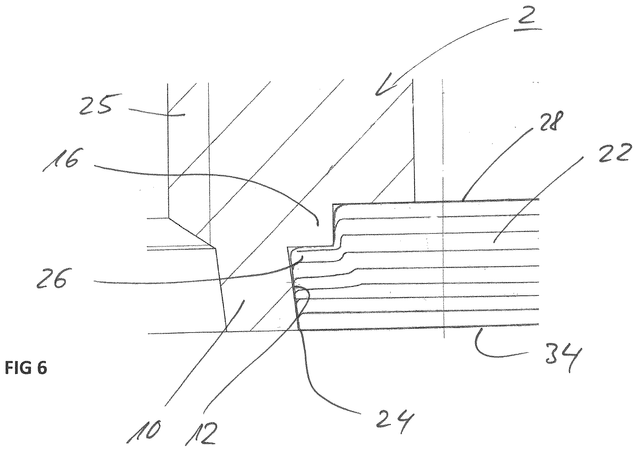

Zeitgleich zum Stanzvorgang erfolgt der Einpressvorgang, bei dem die axiale Auszugssicherung sowie die Verdrehsicherung ausgebildet werden. Von besonderer Bedeutung ist hierbei, dass eine Verformung lediglich der Oberseite 28 des Bauteils erfolgt und der Verdrängersteg 16 von oben Material von der Oberseite 28 des Bauteils 22 verdrängt und in den Hinterschnitt 26 in Längsrichtung quasi nach unten einpresst. Dabei wird Material von der Oberseite 28 in den Hinterschnitt 26 eingeformt, wie dies insbesondere anhand der Querschnittsdarstellung der Fig. 6 zu erkennen ist Dadurch ergibt sich eine formschlüssige, in Axialrichtung wirksame Auszugssicherung. Zugleich erfolgt auch eine Klemmwirkung in radialer Richtung 14, so dass ein Klemmsitz erreicht ist.

Gleichzeitig werden die Rippen 20 von der Oberseite ebenfalls in die Oberseite 28 des Bauteils eingepresst und verdrängen Material. Der Hinterschnitt 26 wird dabei vollständig ausgefüllt.

Die fertige Einpressverbindung ist insbesondere anhand der Fig. 5 sowie Fig. 6 zu erkennen. Von besonderer Bedeutung ist hierbei, dass an der Unterseite 34 insgesamt eine ebene Fläche ausgebildet ist und das Bauteil 22 an der Unterseite 34 gerade nicht verformt wird. Maßgebend hierfür ist die ebene Matrizenoberseite 32. Der Stanzkragen 10 schließt im Ausführungsbeispiel bündig mit der Unterseite 34 ab.

Im Hinblick auf einen prozesssicheren Fügevorgang auch für eine Vielzahl von aufeinander folgenden Einpressoperationen weist die Matrize 30 weiterhin eine spezielle Ausgestaltung ihrer Ausnehmung 40 auf. Wie insbesondere anhand der Fig. 3 zu erkennen ist, weist die Ausnehmung 40 einen vorzugsweise zylindrischen Bereich 42 auf, an dem eine Innenmantelfläche 44 der Ausnehmung beispielsweise durch einen Erodierprozess aufgeraut ist. An diesen zylindrischen Bereich 42 schließt sich dann ein vorzugsweise konisch erweiternder Bereich 46 an, in dem die Innenmantelfläche 44 vorzugsweise glatt ausgebildet ist. Im weiteren Verlauf schließt sich dann wiederum ein vorzugsweise zylindrischer Bereich 48 an, welcher im Vergleich zu dem zylindrischen Bereich 42 mit der aufgerauten Innenmantelfläche 44 einen vergrößerten Durchmesser für eine möglichst reibungslose Abfuhr des Stanzbutzens 36 aufweist.

Die hier beschriebene Stanzmutter 2 sowie die mit ihr ausgebildete Einpressverbindung mit dem Bauteil 22 werden vorzugsweise bei Leichtbaumaterialien, insbesondere bei Aluminium-Blechen eingesetzt. Vorzugsweise wird die Stanzmutter 2 dabei im Kraftfahrzeugbereich eingesetzt. Bei dem Bauteil 22 handelt es sich beispielsweise um ein Türelement eines Kraftfahrzeugs, in das eine Vielzahl derartiger Stanzmuttern 2 eingesetzt wird. Über diese werden weitere Funktionselemente befestigt. Vorzugsweise werden im Falle eines Türmoduls an derartige Stanzmuttern 2 beispielsweise Lautsprecher, Fensterhebermotoren, (Kunststoff-) Blenden, Sonnenrollos etc. befestigt.

Die Stanzmuttern 2 sind insgesamt fest eingepresst, so dass keine Klappergeräusche entstehen können, selbst wenn die Stanzmuttern 2 nicht mit einer Schraube belegt sind.

Die Stanzmuttern 2 werden beispielsweise in Aluminiumbleche mit einer Blechstärke im Bereich von etwa 1 mm eingepresst. Für die Aluminiumbleche wird beispielsweise eine Al-Mg-Legierung z.B. AlMg4,5Mn verwendet.

Allgemein werden derartige Stanzmuttern 2 mit mehreren (zehn) kN Stanzkraft eingepresst, beispielsweise mit etwa 20kN speziell bei Muttern der Größe M5 und in das oben genannte Aluminiumblech mit einer Blechstärke von 1,2mm.

### Bezugszeichenliste

- 2: Stanzmutter
- 4: Längsrichtung
- 6: Kopfteil
- 8: Kopfauflage
- 10: Stanzkragen
- 12: Außenmantelfläche
- 14: radiale Richtung
- 16: Verdrängersteg
- 18: äußerer Bereich
- 20: Rippe
- 22: Bauteil
- 24: Schneidkante
- 25: Innengewinde
- 26: Hinterschnitt
- 28: Oberseite
- 30: Matrize
- 32: Matrizenoberseite
- 34: Unterseite
- 36: Stanzbutzen
- 38: Loch
- 40: Ausnehmung
- 42: zylindrischer Bereich
- 44: Innenmantelfläche
- 46: konischer Bereich
- 48: zylindrischer Bereich
- α: Winkel
- b1: radiale Breite Verdrängersteg
- b2: radiale Breite äußerer Bereich
- a1: axiale Länge Verdrängersteg
- a2: axiale Länge Stanzkragen
- d1: Durchmesser Kopfauflage
- d2: Durchmesser Stanzkragen
- D: Blechdicke

## Patentansprüche

1. Selbststanzendes Einpresselement (2) zum Einpressen in ein Bauteil, mit
- einer Längsrichtung (4)
- einem Kopfteil (6) mit einer Kopfauflage (8) zum Aufliegen auf das Bauteil einem Stanzkragen (10) mit einer endseitigen Schneidkante (24), **dadurch gekennzeichnet, dass**
- der Stanzkragen (10) in Längsrichtung (4) konisch aufweitend ausgebildet ist und eine bezüglich der Längsrichtung (4) schräg nach außen geneigte Außenmantelfläche (12) aufweist, so dass zwischen der Schneidkante (24) und der Kopfauflage (8) ein Hinterschnitt (26) ausgebildet ist,
- die Kopfauflage (8) einen umlaufenden Verdrängersteg (16) aufweist, an den sich in radialer Richtung (14) ein radial äußerer Bereich (18) der Kopfauflage (8) anschließt, welcher in Längsrichtung (4) gegenüber dem Verdrängersteg (16) zurückversetzt ist,
- der Verdrängersteg (16) unter Ausbildung einer Stufe in den radial äußeren Bereich (18) übergeht und
- im radial äußeren Bereich (18) um den Umfang verteilt mehrere Rippen (20) zur Ausbildung einer Verdrehsicherung ausgebildet sind.

2. Selbststanzendes Einpresselement (2) nach Anspruch 1,
**dadurch gekennzeichnet,**
**dass** die Rippen (20) mit dem Verdrängersteg (16) fluchten.

3. Selbststanzendes Einpresselement (2) nach einem der vorhergehenden Ansprüche,
**dadurch gekennzeichnet,**
**dass** eine umlaufende Mantelseite des Verdrängerstegs (16) sowie eine umlaufende Mantelfläche des Stanzkragens (10) glatt ausgebildet sind ohne in Umfangsrichtung wirkende Formschlusselemente.

4. Selbststanzendes Einpresselement (2) nach einem der vorhergehenden Ansprüche,
**dadurch gekennzeichnet,**
**dass** der äußere Bereich (18) keinen äußeren umlaufenden Ringsteg aufweist.

5. Selbststanzendes Einpresselement (2) nach einem der vorhergehenden Ansprüche,
**dadurch gekennzeichnet,**
**dass** der Verdrängersteg (16) in radialer Richtung (14) über die Schneidkante (24) übersteht.

6. Selbststanzendes Einpresselement (2) nach dem vorhergehenden Anspruch,
**dadurch gekennzeichnet,**
**dass** der Verdrängersteg (16), insbesondere der über die Schneidkante (24) in radialer Richtung (14) überstehende Teilbereich ein erstes Volumen und der Hinterschnitt ein zweites Volumen aufweist, wobei das erste Volumen insbesondere um den Faktor 2 bis 5 größer als das zweite Volumen ist.

7. Selbststanzendes Einpresselement (2) nach einem der beiden vorhergehenden Ansprüche und nach Anspruch 1,
**dadurch gekennzeichnet,**
**dass** sämtliche Rippen (20) zusammen ein drittes Volumen aufweisen, welches kleiner ist als das erste Volumen des Verdrängerstegs (16), insbesondere lediglich 30% bis 90% des ersten Volumens aufweist.

8. Selbststanzendes Einpresselement (2) nach einem der vorhergehenden Ansprüche,
**dadurch gekennzeichnet,**
**dass** der Verdrängersteg (16) eine radiale Breite (b1) aufweist, die kleiner gleich einer radialen Breite (b2) des äußeren Bereichs (18) ist, und/oder dass der Verdrängersteg (16) eine axiale Länge (a1) aufweist, welche geringer ist als eine axiale Länge (a2) des Stanzkragens (10) und im Bereich von 30% bis 70% der axialen Länge (a2) des Stanzkragens (10) liegt.

9. Selbststanzendes Einpresselement (2) nach einem der vorhergehenden Ansprüche,
**dadurch gekennzeichnet,**
**dass** es als eine Stanzmutter mit einem Innengewinde (25) ausgebildet ist, welches sich nur bis zur axialen Höhe des Verdrängerstegs (16) erstreckt und dass am Stanzkragen (10) kein Innengewinde (25) ausgebildet ist.

10. Selbststanzendes Einpresselement (2) nach einem der vorhergehenden Ansprüche,
**dadurch gekennzeichnet,**
**dass** ein Durchmesser (d1) der Kopfauflage (8) lediglich etwa 20% bis 40% größer ist als ein Durchmesser (d2) des Stanzkragens (10).

11. Selbststanzendes Einpresselement (2) nach Anspruch 1,
**dadurch gekennzeichnet,**
**dass** eine umlaufende Mantelseite des Verdrängerstegs (16) sowie eine umlaufende Mantelfläche des Stanzkragens (10) glatt ausgebildet sind ohne in Umfangsrichtung wirkende Formschlusselemente,
**dass** der äußere Bereich (18) keinen äußeren umlaufenden Ringsteg aufweist,
**dass** die Rippen (20) mit dem Verdrängersteg (16) fluchten dass der Verdrängersteg (16) in radialer Richtung (14) über die Schneidkante (24) übersteht,
**dass** der Verdrängersteg (16) ein erstes Volumen und der Hinterschnitt ein zweites Volumen aufweist, wobei das erste Volumen um den Faktor 2 bis 5 größer als das zweite Volumen ist,
**dass** es als eine Stanzmutter mit einem Innengewinde (25) ausgebildet ist, welches sich nur bis zur axialen Höhe des Verdrängerstegs (16) erstreckt und dass am Stanzkragen (10) kein Innengewinde (25) ausgebildet ist.

12. Einpressverbindung zwischen einem selbststanzenden Einpresselement (2) nach Anspruch 1 und einem Bauteil (22), welches eine Oberseite (28) sowie eine Unterseite (34) aufweist, wobei der Verdrängersteg (16) in die Oberseite (28) des Bauteils (22) eingepresst ist und Material des Bauteils (22) durch den Verdrängersteg (16) in den Hinterschnitt (26) verdrängt ist.

13. Einpressverbindung nach dem vorhergehenden Anspruch
**dadurch gekennzeichnet,**
**dass**
- das Bauteil (22) umlaufend zum Stanzkragen (10) nicht nach oben in Richtung zum Kopfteil (6) umgeformt ist
- der Stanzkragen (10) nicht über die Unterseite (34) des Bauteils (22) übersteht,
- der Verdrängersteg (16) in radialer Richtung (14) über den Stanzkragen (10) übersteht und der überstehende Teilbereich ein erstes Volumen und der Hinterschnitt ein zweites Volumen aufweist, wobei, das erste Volumen um zumindest das zweifache größer ist als das zweite Volumen,
- der Hinterschnitt (26) vollständig mit verdrängtem Material gefüllt ist, so dass bereits hierdurch ein Klemmsitz des Einpresselements (2) im Bauteil (22) erreicht ist, wobei
- ergänzend um den Umfang des Einpresselements (2) verteilt mehrere Rippen (20) zur weiteren Verdrehsicherung angeordnet sind, die sich in radialer Richtung (14) an den Verdrängersteg (16) anschließen und die in die Oberseite (28) eingepresst sind.

14. Einpressverbindung nach Anspruch 13
**dadurch gekennzeichnet,**
**dass** das Bauteil (22) aus einem Leichtmetall, insbesondere aus Aluminium besteht.

15. Verfahren zur Herstellung einer Einpressverbindung nach einem der Ansprüche 12 bis 14, bei dem das Bauteil (22) auf eine Matrize (30) zum Aufliegen gebracht wird und das Einpresselement (2) in das Bauteil (22) eingepresst wird, wobei zunächst der Stanzkragen (10) ein Loch (38) im Bauteil (22) ausstanzt und ein Stanzbutzen (36) in eine Ausnehmung der Matrize (30) eingedrückt wird.

## Claims

1. Self-punching press-fit element (2) for press-fitting into a component, with
- a longitudinal direction (4)
- a head part (6) with a head bearing (8) for bearing on the component
- a punching collar (10) with a cutting edge (24) at the end,
**characterized in that**
- the punching collar (10) is designed as to widen in a conical manner in the longitudinal direction (4) and has an external shell face (12) inclined obliquely outwards with respect to the longitudinal direction (4), so that an undercut (26) is formed between the cutting edge (24) and the head bearing (8),
- the head bearing (8) has a circumferential displacement web (16), which is adjoined in the radial direction (14) by a radially external region (18) of the head bearing (8), which is set back in the longitudinal direction (4) relative to the displacement web (16),
- the displacement web (16) merges into the radially external region (18) forming a step, and
- in the radially external region (18) several ribs (20) are formed distributed around the circumference to form an anti-rotation safeguard.

2. Self-punching press-fit element (2) according to claim 1,
**characterized in**
**that** the ribs (20) are aligned with the displacement web (16).

3. Self-punching press-fit element (2) according to one of the preceding claims,
**characterized in**
**that** a circumferential shell side of the displacement web (16) and a circumferential shell face of the punching collar (10) are smooth without positive locking elements acting in the circumferential direction.

4. Self-punching press-fit element (2) according to one of the preceding claims,
**characterized in**
**that** the external region (18) has no external circumferential ring web.

5. Self-punching press-fit element (2) according to one of the preceding claims,
**characterized in**
**that** the displacement web (16) projects in the radial direction (14) over the cutting edge (24).

6. Self-punching press-fit element (2) according to the previous claim,
**characterized in**
**that** the displacement web (16), in particular the partial region projecting beyond the cutting edge (24) in the radial direction (14), has a first volume and the undercut has a second volume, the first volume being larger than the second volume, in particular by a factor of 2 to 5.

7. Self-punching press-fit element (2) according to one of the two preceding claims and according to claim 1,
**characterized in**
**that** all the ribs (20) together have a third volume, which is smaller than the first volume of the displacement web (16), in particular is only 30% to 90% of the first volume.

8. Self-punching press-fit element (2) according to one of the preceding claims,
**characterized in**
**that** the displacement web (16) has a radial width (b1), which is smaller than or equal to a radial width (b2) of the external region (18), and/or that the displacement web (16) has an axial length (a1), which is smaller than an axial length (a2) of the punching collar (10) and is in the range from 30% to 70% of the axial length (a2) of the punching collar (10).

9. Self-punching press-fit element (2) according to any of the foregoing claims,
**characterized in**
**that** it is designed as a punching nut with an internal thread (25), which extends only up to the axial height of the displacement web (16), and that no internal thread (25) is formed on the punching collar (10).

10. Self-punching press-fit element (2) according to one of the preceding claims,
**characterized in**
**that** a diameter (d1) of the head bearing (8) is only about 20 % to 40 % larger than a diameter of the punching collar (10).

11. Self-punching press-fit element (2) according to claim 1,
**characterized in**
**that** a circumferential shell side of the displacement web (16) and a circumferential shell face of the punching collar (10) are smooth without positive locking elements acting in the circumferential direction,
**that** the external region (18) has no external circumferential ring web,
**that** the ribs (20) are aligned with the displacement web (16),
**that** the displacement web (16) projects in the radial direction (14) over the cutting edge (24),
**that** the displacement web (16) has a first volume and the undercut has a second volume, the first volume being larger than the second volume by a factor of 2 to 5,
**that** it is designed as a punching nut with an internal thread (25), which extends only up to the axial height of the displacement web (16), and that no internal thread (25) is formed on the punching collar (10).

12. Press-fit connection between a self-punching press-fit element (2) according to claim 1 and a component (22), which has an upper side (28) and an underside (34), wherein the displacement web (16) is pressed into the upper side (28) of the component (22) and material of the component (22) is displaced into the undercut (26) by the displacement web (16).

13. Press-fit connection according to the previous claim
**characterized in**
**that**
- the component (22) is not deformed upwards towards the head part (6) circumferentially around the punching collar (10)
- the punching collar (10) does not protrude beyond the underside (34) of the component (22),
- the displacement web (16) projects in the radial direction (14) beyond the punching collar (10) and the projecting portion has a first volume and the undercut has a second volume, wherein the first volume is at least twice as large as the second volume,
- the undercut (26) is completely filled with displaced material, so that a clamping fit of the press-fit element (2) in the component (22) is already achieved, wherein
- in addition, several ribs (20) for further anti-rotation safeguard are arranged distributed around the circumference of the press-fit element (2), which are connected to the displacement web (16) in the radial direction (14) and which are pressed into the upper side (28).

14. Press-fit connection according to claim 13
**characterized in**
**that** the component (22) consists of a light metal, in particular aluminium.

15. Method for producing a press-fit connection according to one of claims 12 to 14, in which the component (22) is brought to bear on a die (30) and the press-fit element (2) is pressed into the component (22), wherein first of all the punching collar (10) punches out a hole (38) in the component (22) and a punching slug (36) is pressed into a recess of the die (30).

## Revendications

1. Élément d'enfoncement auto-perforant (2) pour l'enfoncement dans un composant, avec
- une direction longitudinale (4)
- une partie de tête (6) avec un support de tête (8) pour l'appui sur le composant
- un collier de poinçonnage (10) avec une arête de coupe (24) à l'extrémité, **caractérisé en ce que**
- le collier de poinçonnage (10) est conçu de manière à s'élargir de façon conique dans la direction longitudinale (4) et comprend une surface d'enveloppe extérieure (12) inclinée obliquement vers l'extérieur par rapport à la direction longitudinale (4), de sorte qu'une contre-dépouille (26) est formée entre l'arête de coupe (24) et le support de tête (8),
- le support de tête (8) comprend une nervure de déplacement (16) périphérique, à laquelle se raccorde dans la direction radiale (14) une zone (18) radialement extérieure du support de tête (8), qui est en retrait dans la direction longitudinale (4) par rapport à la nervure de déplacement (16),
- la nervure de déplacement (16) se fond dans la zone radialement extérieure (18) en formant un gradin, et
- dans la région radialement extérieure (18) une pluralité de ailettes (20) sont formées réparties sur la circonférence pour former une sécurité anti-rotation.

2. Élément d'enfoncement auto-perforant (2) selon la revendication 1,
**caractérisé en ce**
**que** les ailettes (20) sont alignées avec la nervure de déplacement (16).

3. Élément d'enfoncement auto-perforant (2) selon l'une des revendications précédentes,
**caractérisé en ce**
**qu'**une côté latérale circonférentielle de la nervure de déplacement (16) et une surface latérale circonférentielle du collier de poinçonnage (10) sont conçues pour être lisses sans éléments de verrouillage positif agissant dans la direction circonférentielle.

4. Élément d'enfoncement auto-perforant (2) selon l'une des revendications précédentes,
**caractérisé en ce**
**que** la région externe (18) ne comprend pas nervure annulaire circonférentielle externe.

5. Élément d'enfoncement auto-perforant (2) selon l'une des revendications précédentes,
**caractérisé en ce**
**que** la nervure de déplacement (16) dépasse l'arête de coupe (24) dans la direction radiale (14).

6. Élément d'enfoncement auto-perforant (2) selon la revendication précédente,
**caractérisé en ce**
**que** la nervure de déplacement (16), en particulier la zone partielle dépassant de l'arête de coupe (24) dans la direction radiale (14), comprend un premier volume et la contre-dépouille comprend un deuxième volume, le premier volume étant plus grand que le deuxième volume, en particulier d'un facteur de 2 à 5.

7. Élément d'enfoncement auto-perforant (2) selon l'une des deux revendications précédentes et selon la revendication 1,
**caractérisé en ce**
**que** toutes les ailettes (20) ensemble comprennent un troisième volume, qui est plus petit que le premier volume de la nervure de déplacement (16), qui en particulier comprend seulement 30 à 90 % du premier volume.

8. Élément d'enfoncement auto-perforant (2) selon l'une des revendications précédentes,
**caractérisé en ce**
**que** la nervure de déplacement (16) comprend une largeur radiale (b1), qui est inférieure ou égale à une largeur radiale (b2) de la zone extérieure (18), et/ou en ce que la nervure de déplacement (16) comprend une longueur axiale (a1), qui est inférieure à une longueur axiale (a2) du collier de poinçonnage (10) et qui est comprise entre 30 % et 70 % de la longueur axiale (a2) du collier de poinçonnage (10).

9. Élément d'enfoncement auto-perforant (2) selon l'une des revendications précédentes,
**caractérisé en ce**
**qu'**il est conçu comme un écrou perforant avec un filetage intérieur (25), qui ne s'étend que jusqu'à la hauteur axiale de la nervure de déplacement (16), et qu'aucun filetage intérieur (25) n'est formé sur le collier de poinçonnage (10).

10. Élément d'enfoncement auto-perforant (2) selon l'une des revendications précédentes,
**caractérisé en ce**
**qu'**un diamètre (d1) du support de tête (8) n'est supérieur que d'environ 20 % à 40 % à un diamètre du collier de poinçonnage (10).

11. Élément d'enfoncement auto-perforant (2) selon la revendication 1,
**caractérisé en ce**
**qu'**une face latérale circonférentielle de la nervure de déplacement (16) et une surface latérale circonférentielle du collier de poinçonnage (10) sont conçues pour être lisses sans éléments de verrouillage positif agissant dans la direction circonférentielle,
**que** la région externe (18) ne comprend pas d'anneau circonférentiel externe, que les ailettes (20) sont alignées avec la nervure de déplacement (16) que la nervure de déplacement (16) dépasse l'arête de coupe (24) dans la direction radiale (14),
**que** la nervure de déplacement (16) comprend un premier volume et la contre-dépouille comprend un deuxième volume, le premier volume étant plus grand que le deuxième volume d'un facteur de 2 à 5,
**qu'**il est conçu comme un écrou perforant avec un filetage intérieur (25), qui ne s'étend que jusqu'à la hauteur axiale de la nervure de déplacement (16) et qu'aucun filetage intérieur (25) n'est formé sur le collier de poinçonnage (10).

12. Raccordement par enfoncement entre un élément d'enfoncement auto-perforant (2) selon la revendication 1 et un composant (22), qui comprend une face supérieure (28) et une face inférieure (34), la nervure de déplacement (16) étant pressée dans la face supérieure (28) du composant (22) et le matériau du composant (22) étant déplacé dans la contre-dépouille (26) par nervure de déplacement (16).

13. Raccordement par enfoncement selon la revendication précédente
**caractérisé en ce**
**que**
- l'élément (22) n'est pas déformé vers le haut en direction de la partie tête (6) circonférentiellement par rapport au collier de poinçonnage (10)
- le collier de poinçonnage (10) ne dépasse pas de la face inférieure (34) du composant (22),
- la nervure de déplacement (16) dépasse dans la direction radiale (14) du collier de poinçonnage (10) et la partie saillante comprend un premier volume et la contre-dépouille comprend un deuxième volume, le premier volume étant au moins deux fois plus grand que le deuxième volume,
- la contre-dépouille (26) est entièrement remplie de matériau déplacé, de sorte qu'un ajustement serré de l'élément d'enfoncement (2) dans le composant (22) est déjà obtenu, dans lequel
- complémentairement, plusieurs ailettes (20) sont réparties sur la circonférence de l'élément d'enfoncement (2) pour une protection anti-rotation supplémentaire, qui sont reliées à la nervure de déplacement (16) dans la direction radiale (14) et qui sont enfoncées dans la face supérieure (28).

14. Raccordement par enfoncement selon la revendication 13,
**caractérisé en ce**
**que** le composant (22) est constitué d'un métal léger, en particulier d'aluminium.

15. Procédé de fabrication d'un raccordement par enfoncement selon l'une des revendications 12 à 14, dans lequel le composant (22) est amenée en appui sur une matrice (30) et l'élément d'enfoncement (2) est enfoncé dans le composant (22), dans lequel tout d'abord le collier de poinçonnage (10) découpe un trou (38) dans le composant (22) et un tampon de poinçonnage (36) est enfoncé dans un évidement de la matrice (30).
